# EUROPÄISCHE PATENTSCHRIFT

(11) **EP 0 341 414 B1**
(45) Veröffentlichungstag und Bekanntmachung des Hinweises auf die Patenterteilung: **19.01.1994**
(21) Anmeldenummer: 89105912.3
(22) Anmeldetag: 05.04.1989
(51) Int. Cl.: A01D 78/10, A01D 80/00

(54) **Schutzvorrichtung für Kreiselheumaschinen mit hochklappbaren Arbeitswerkzeugen**
Protecting device for hay-making machines with tools folding upwardly
Dispositif de protection pour râteau-faneurs avec outils de travail relevables

(30) Priorität: 11.05.1988 DE 3816123
(43) Veröffentlichungstag der Anmeldung: 15.11.1989
(73) Patentinhaber: CLAAS SAULGAU GMBH, D-88340 Saulgau (DE)
(72) Erfinder: Rauch, Hans, D-7968 Saulgau-Kleintissen (DE); Deni, Franz, D-7968 Saulgau-Bogenweiler (DE)

(56) Entgegenhaltungen:
- DD-A- 156 635
- PROSPEKT "KUHN" GIROHEUER GF 6000 MH, November 1987 KUHN MASCHINEN-VERTRIEBGMBH, Kehl/Rhein, Deutschland

## Beschreibung

Die Erfindung bezieht sich auf Kreiselheumaschinen mit einer Schutzvorrichtung nach dem Oberbegriff des Anspruches 1.

Kreiselheumaschinen dieser Gattung sind durch einen Prospekt der Firma Kuhn SA Saverne mit der Bezeichnung "Giroheuer GF 6000 MH" und dem Ausgabedatum 11/87 bekanntgeworden. Die Schutzvorrichtung ist bei dieser Maschine um eine Längsachse hochklappbar, die quer zur Fahrtrichtung gesehen mit Abstand von der Schwenkachse des inneren Auslegers am Maschinenrahmen liegt. In der Nähe ihres freien Endes ist die Schutzvorrichtung mit einem Gestänge verbunden, das seinerseits in Verbindung mit einem äußeren hochklappbaren Ausleger für die Arbeitswerkzeuge steht. Das Gestänge ist mit der Schutzvorrichtung über eine Schlitzführung gekoppelt, die unter anderem dazu dient, in der Arbeitsstellung eine freie Beweglichkeit der Ausleger zur Bodenanpassung zuzulassen, ohne daß die Schutzvorrichtung mitgewegt wird. Diese Koppelung über eine Schlitzführung hat aber den Nachteil, daß die Schutzvorrichtung in Arbeitsstellung nur lose über ihr Eigengewicht in Horizontallage gehalten wird und beim Überfahren von unebenem Gelände ständig nach oben ausschlagen kann, wodurch Geräusche erzeugt und großer Verschleiß bewirkt wird.

Dieser Nachteil soll durch die Merkmale des kennzeichnenden Teiles des Anspruchs 1 behoben werden. Die freie Beweglichkeit der Schutzvorrichtung in der Arbeitsstellung wird dadurch unterbunden, daß der Maschinenrahmen, der Ausleger, die Schutzvorrichtung und das Gestänge ein Gelenkviereck bilden, das so gestaltet ist, daß für die Koppelung des Gestänges an der Schutzvorrichtung bzw. am Ausleger eine Schlitzführung entfallen kann, die Abstandsveränderungen der Schwenkachsen beim Schwenken der Ausleger mit der Schutzvorrichtung ausgleicht. Dadurch ist auch gewährleistet, daß sowohl in der Transportstellung, als auch in der Arbeitsstellung und in allen Zwischenstellungen eine eindeutige Zuordnung von Auslegern und Schutzvorrichtungen besteht.

Das Merkmal des Anspruches 2 bezweckt, in der Arbeitsstellung auch noch die Spiele in den Gelenken des Gelenkvierecks zu unterdrücken und so die Schutzvorrichtung mit dem Maschinenrahmen spielfrei zu verspannen.

Diese Verspannung kann z. B. dadurch erfolgen, daß das Gestänge quer zur Fahrtrichtung angeordnet ist und relativ zu dem Anschlag für die Tiefstlage der Schutzvorrichtung eine geringe Überlänge hat und sich in der Tiefstlage etwas durchbiegt, oder daß an geeigneter Stelle z.B. eine Druckfeder eingebaut ist.

Nach einem anderen Merkmal der Erfindung soll das Gestänge schräg zur Fahrtrichtung verlaufen. Wenn es, wie oben geschildert, ebenfalls eine gerine Überlänge besitzt, dann werden in der Arbeitsstellung die freien Enden des Tragbügels für die Schutzvorrichtung elastisch aufgespreizt und dienen dadurch als Feder zur Verspannung der Gelenke.

Ein weiteres Merkmal der Erfindung wird mit Anspruch 6 offenbart.

Die Erfindung wird anhand von drei Abbildungen beispielsweise erläutert.
Fig. 1 zeigt eine Schutzvorrichtung an einer Kreiselheumaschine in Ansicht von oben,
Fig. 2 zeigt den gleichen Gegenstand von hinten und
Fig. 3 eine schematische Darstellung der Getriebekinnematik.

Eine Kreiselheumaschine hat einen Maschinenrahmen (1), der auf zwei Laufrädern (2) läuft. Er wird über einen Dreipunktbock (3) mit einem nicht dargestellten Schlepper verbunden. An der Unterseite des Maschinenrahmens (1) sind Arbeitswerkzeuge (4) gelagert. Mit dem Maschinenrahmen (1) ist ein Tragbügel (5) mit freien Enden (6) fest verbunden. Die freien Enden (6) besitzen feste Anschläge (7). Um Drehachsen (8) sind stangenförmige Schutzvorrichtungen (9) drehbar angeordnet.

An Gelenken (10, 10′) sind innere Ausleger (11) und äußere Ausleger (11′) drehbar gelagert. Sie tragen je ein Laufrad (2′) und ein Arbeitswerkzeug (4′). Die Ausleger (11, 11′) können mit hydraulischen Hubzylindern (12) hochgehoben oder abgesenkt werden.

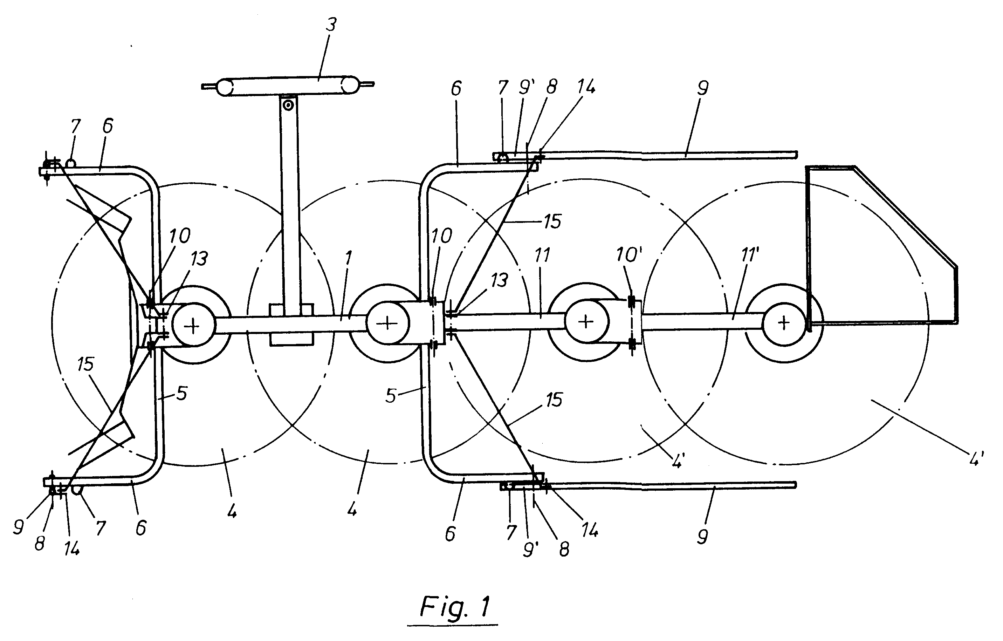

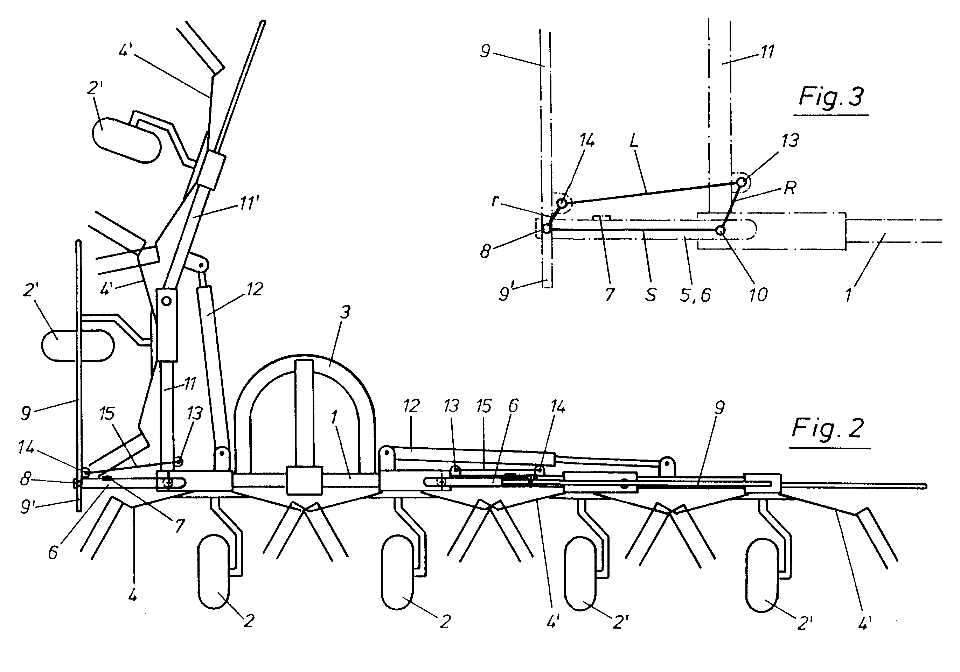

Die stangenförmigen Schutzvorrichtungen (9) haben einen nach innen gerichteten Fortsatz (9′), der sich in der (abgesenkten) Arbeitsstellung von unten gegen die Anschläge (7) anlegt (Fig. 1 und 2, rechte Bildhälfte). Die Ausleger (11) besitzen eine Gelenklasche (13) und die stangenförmigen Schutzvorrichtungen (9) eine Gelenklasche (14). Die Gelenklaschen (13, 14) sind über ein Gestänge (15) miteinander verbunden.

In Fig. 3 ist die Getriebekinnematik des Gelenkvierecks schematisch dargestellt. Das Gestell (S) wird von der Verbindungslinie zwischen einem Gelenk (10) und einer Drehachse (8) gebildet, die Kurbel (R) durch die Verbindungslinie zwischen einem Gelenk (10) und einer Gelenklasche (13), die Schwinge (r) durch die Verbindungslinie zwischen einer Drehachse (8) und einer Gelenklasche (14), während der Lenker (L) durch das Gestänge (15) gebildet wird.

Das Gelenkviereck (S, R, r, L) ist so ausgelegt, daß die stabförmigen Schutzvorrichtungen (9) bei hochgeklapptem Ausleger (11) etwa senkrecht stehen, während bei abgeklapptem Ausleger (11) die stabförmigen Schutzvorrichtungen (9) etwa waagrecht liegen und ihr nach innen gerichteter Fortsatz (9′) mit Vorspannung gegen den Anschlag (7) drückt und dadurch alle Gelenkstellen (8, 10, 14, 13) verspannt.

## Patentansprüche

1. Kreiselheumaschine mit Arbeitswerkzeugen (4) an um in Fahrtrichtung liegende Schwenkachsen (10) an einem Maschinenrahmen (1) beweglich gelagerten und für eine Transportstellung hochklappbaren Auslegern (11) und mit einer Schutzvorrichtung (9, 9'), die über ein Gestänge (15) mit den Auslegern (11) so verbunden ist, daß sie in hochgeklapptem Zustand der Ausleger (11) etwa senkrecht steht, und in abgelassenem Zustand der Ausleger (11) etwa waagrecht liegt, wobei die Tiefstlage durch einen festen Anschlag (7) begrenzt ist, dadurch gekennzeichnet, daß der Maschinenrahmen (1), der Ausleger (11), die Schutzvorrichtung (9, 9') und das Gestänge (15) ein Gelenkviereck (S, R, r, L) bilden, wovon die Kurbel (R) zwischen den Gelenken (10, 13) am Ausleger (11), das Gestell (S) zwischen den Gelenken (8, 10) am Maschinenrahmen (1), der Lenker (L) zwischen den Gelenken (13, 14) am Gestänge (15) und die Schwinge (r) zwischen den Gelenken (8, 14) an der Schutzvorrichtung (9, 9') liegt, wobei die Schwinge (r) und die Kurbel (R), quer zur Fahrtrichtung gesehen in Arbeitsstellung der Maschine, jeweils kleiner sind als der Lenker (L) und das Gestell (S) und wovon, in Höhenrichtung gesehen in Arbeitsstellung der Maschine, die Gelenke (13, 14) am Gestänge (15) über den Gelenken (8, 10) am Maschinenrahmen (1) liegen, und daß Teile dieses Gelenkviereckes (S, R, r, L) elastisch ausgestaltet sind.

2. Kreiselheumaschine mit Schutzvorrichtung nach Anspruch 1, dadurch gekennzeichnet, daß das Gelenkviereck (S, R, r, L) so ausgebildet ist, daß die Schutzvorrichtung (9,9') in abgelassenem Zustand der Ausleger (11) gegen einen festen Anschlag (7) am Maschinenrahmen (1) elastisch angedrückt wird.

3. Kreiselheumaschine mit Schutzvorrichtung nach den Ansprüchen 1 und 2, dadurch gekennzeichnet, daß das Gestänge (15) schräg zur Fahrtrichtung verläuft und einerseits an dem Ausleger (11) und andererseits an der Schutzvorrichtung (9) gelenkig befestigt ist.

4. Kreiselheumaschine mit Schutzvorrichtung nach Anspruch 3, dadurch gekennzeichnet, daß das Gestänge (15) quer zur Fahrtrichtung liegt.

5. Kreiselheumaschine mit Schutzvorrichtung nach den Ansprüchen 1 bis 4, dadurch gekennzeichnet, daß die Kurbel (R) des Gelenkviereckes (S,R, r, L) länger als die Schwinge (r) des Gelenkviereckes (S, R, r, L) ist.

## Claims

1. A rotary hay-making machine having working implements (4) on arms (11) which are mounted movably on a machine frame (1) about pivot axes (10) lying in the direction of travel and which can be folded up for a transportation position, and a guard device (9, 9') which is so connected to the arms (11) by way of a linkage (15) that it is disposed approximately vertically in the upwardly folded condition of the arms (11) and lies approximately horizontally in the letdown condition of the arms (11), wherein the lowest position is defined by a fixed stop (7), characterised in that the machine frame (1), the arm (11), the guard device (9, 9') and the linkage (15) form a pivotal quadrilateral (S, R, r, L), of which the crank (R) lies between the pivots (10, 13) on the arm (11), the frame portion (S) lies between the pivots (8, 10) on the machine frame (1), the link (L) lies between the pivots (13, 14) on the linkage (15) and the rocking arm (r) lies between the pivots (8, 14) on the guard device (9, 9'), wherein the rocking arm (r) and the crank (R), as viewed transversely to the direction of travel, in the working position of the machine, are each smaller than the link (L) and the frame portion (S), and of which, as viewed in the heightwise direction in the working position of the machine, the pivots (13, 14) on the linkage (15) lie above the pivots (8, 10) on the machine frame (1), and that parts of the pivotal quadrilateral (S, R, r, L) are elastic.

2. A rotary hay-making machine with guard device according to claim 1 characterised in that the pivotal quadrilateral (S, R, r, L) is of such a configuration that, in the letdown condition of the arms (11) the guard device (9, 9') is elastically pressed against a fixed stop (7) on the machine frame (1).

3. A rotary hay-making machine with guard device according to claims 1 and 2 characterised in that the linkage (15) extends inclinedly relative to the direction of travel and is pivotally connected on the one hand to the am (11) and on the other hand to the guard device (9).

4. A rotary hay-making machine with guard device according to claim 3 characterised in that the linkage (15) is disposed transversely to the direction of travel.

5. A rotary hay-making machine with guard device according to claims 1 to 4 characterised in that the crank (R) of the pivotal quadrilateral (S, R, r, L) is longer than the rocking arm (r) of the pivotal quadrilateral (S, R, r, L).

## Revendications

1. Râteau-faneur comprenant des outils de travail (4) montés de façon mobile sur des axes de pivotement (10) orientés dans la direction de la marche d'un bâti (1) de la machine et des bras (11) pouvant être relevés dans la position de transport, et un dispositif de protection (9, 9') qui est relié par une tringle (15) aux bras (11) de manière qu'à l'état relevé des bras (11) il soit sensiblement vertical, et qu'à l'état libre des bras (11) il soit sensiblement horizontal, la position la plus basse étant limitée par une butée fixe (7), caractérisé en ce que le bâti (1) de la machine, le bras (11), le dispositif de protection (9, 9') et la tringle (15) forment un quadrilatère articulé (S, R, r, L), dont la bielle (R) est disposée entre les articulations (10, 13) du bras (11), la structure de support (S) entre les articulations (8, 10) du bâti (1) de la machine, le bras (L) entre les articulations (13, 14) de la tringle (15), et le bras oscillant (r) entre les articulations (8, 14) du dispositif de protection (9, 9'), le bras oscillant (r) et la bielle (R), vus en direction transversale à la direction de la marche et dans la position de travail de la machine sont respectivement plus petits que le bras (L) et la structure (S), et dont, vues en direction en hauteur et dans la position de travail de la machine, les articulations (13, 14) de la tringle (15) sont disposées au-dessus des articulations (8, 10) du bâti (1) de la machine, et des parties de ce quadrilatère articulé (S, R, r, L) sont de constitution élastique.

2. Râteau-faneur à dispositif de protection selon la revendication 1, caractérisé en ce que le quadrilatère articulé (S, R, r, L) est constitué de manière que le dispositif de protection (9, 9') à l'état abaissé des bras (11) s'applique élastiquement contre une butée fixe (7) du bâti (1) de la machine.

3. Râteau-faneur à dispositif de protection selon les revendications 1 et 2, caractérisé en ce que la tringle (15) est agencée en oblique par rapport à la direction de la marche et est fixée de façon articulée d'une part au bras (11) et d'autre part au dispositif de protection (9).

4. Râteau-faneur à dispositif de protection selon la revendication 3, caractérisé en ce que la tringle (15) est transversale à la direction de la marche.

5. Râteau-faneur à dispositif de protection selon les revendications 1 à 4, caractérisé en ce que la bielle (R) du quadrilatère articulé (S, R, r, L) est plus longue que le bras oscillant (r) du quadrilatère articulé (S, R, r, L).
